# EUROPEAN PATENT APPLICATION

(11) **EP 4 712 166 A1**
(43) Date of publication of application: **18.03.2026**
(21) Application number: 24806239.0
(22) Date of filing: 10.04.2024
(51) Int. Cl.: H01M 4/505, H01M 10/0525, C01G 45/12

(54) **LOW-OXYGEN-VACANCY AND HIGH-PERFORMANCE LITHIUM MANGANATE POSITIVE ELECTRODE MATERIAL AND PREPARATION METHOD THEREFOR**

(30) Priority: 17.05.2023 CN 202310559475
(71) Applicant: BASF Shanshan Battery Materials Co., Ltd., Changsha, Hunan 410205 (CN)
(72) Inventor: LI, Juan, Changsha, Hunan 410205 (CN); HU, Jin, Changsha, Hunan 410205 (CN); GUI, Yina, Changsha, Hunan 410205 (CN); LONG, Bo, Changsha, Hunan 410205 (CN); WANG, Ke, Changsha, Hunan 410205 (CN)
(74) Representative: Kovári, Zoltán
(86) International application number: PCT/CN2024/086989
(87) International publication number: WO 2024/234880

(57) **Abstract**

A low-oxygen-vacancy and high-performance lithium manganate positive electrode material. The oxygen vacancy amount thereof is in the range of 10-10,000 ppm after the lithium manganate positive electrode material is characterized by means of an electron paramagnetic resonance spectrum. A preparation method for the positive electrode material comprises the following steps: mixing an Li source compound, an Mn source compound and a compound containing a fluxing agent element, and performing primary calcination in an air atmosphere; and mixing the primary calcination product with a monovalent metal ion compound, performing secondary calcination in an air atmosphere at a temperature lower than that of the primary calcination, and cooling and crushing same to obtain the product. The oxygen vacancy amount of the obtained high-performance lithium manganate positive electrode material is reduced to 1080 ppm, and the Mn dissolution amount is reduced to 23 ppm, such that the high-temperature cycle performance and storage performance are greatly improved, and the product can be well used in the power terminal field of passenger vehicles, electric bicycles, electric tools, etc.

## Description

### TECHNICAL FIELD

The present disclosure belongs to the field of cathode materials for lithium-ion batteries, and in particular relates to a high-performance lithium manganese oxide cathode material with a low oxygen vacancy proportion, and a preparation method thereof.

### BACKGROUND

Lithium manganese oxide (LiMn₂O₄) is a common cathode material. Lithium manganese oxide is widely used in lithium-ion batteries due to its characteristics such as low cost, easy synthesis, and excellent low-temperature performance. The crystal structure of lithium manganese oxide belongs to the cubic crystal system, and has a space group of Fd3m. The conventional synthesis process for lithium manganese oxide in the industry often causes defects in the crystal structure, such as insufficient oxygen permeation due to a too-high reaction rate during sintering or oxygen vacancies due to the loss of internal oxygen atoms. These structural defects can weaken the bonding energy between metal atoms and oxygen atoms, and promote the dissolution of trivalent manganese from a spinel structure to trigger disproportionation, resulting in the dissolution of manganese and the consumption of the cathode active material. Consequently, the performance and service life of a battery are deteriorated. Therefore, oxygen vacancies in the lithium manganese oxide crystal are a critical factor affecting the performance degradation. Process optimization measures are required to reduce the proportion of oxygen vacancies in lithium manganese oxide to enable high performance, such that lithium manganese oxide can be successfully used in the power battery field.

The patent CN108091858A discloses a lithium-rich cathode material doped with lithium manganese oxide at Li/O sites, and a preparation method thereof. In this patent, a lithium-rich cathode material is doped with a lithium compound for modification. The doping of a lithium compound at the Li site includes the doping of N and P at the Li site, and/or the doping of a lithium compound at the O site includes the doping of F and Cl at the O site, such that a strong covalent bond can be formed or partial Mn⁴⁺ can be reduced. In this way, the charge compensation by oxygen atoms is reduced during a charge-discharge process, and the generation of oxygen vacancies is reduced. However, this patent leads to the reduction in oxygen vacancies generated in layered lithium manganese oxide with a molecular formula of Li₂MnO₃ during a charge-discharge process, which differs from the reduction in the intrinsic oxygen vacancies of the crystal structure of lithium manganese oxide in the present disclosure. Moreover, this patent involves a complicated preparation process.

### SUMMARY

A technical problem to be solved by the present disclosure is to overcome the shortcomings and deficiencies mentioned in the background, reduce the proportion of oxygen vacancies in the existing lithium manganese oxide cathode material, and provide a high-performance lithium manganese oxide cathode material with a low oxygen vacancy proportion, and a preparation method thereof.

To reduce the influence of oxygen vacancies in a lithium manganese oxide crystal on the performance of a battery, the optimization can be conducted by controlling a thermal treatment process for a material, adding an appropriate amount of an additive, etc. For example, methods such as selecting appropriate high-temperature calcination parameters and doping with metal compounds can effectively reduce the oxygen vacancy proportion and the Mn dissolution amount in a lithium manganese oxide crystal, thereby improving the electrochemical performance.

In order to solve the above technical problem, the present disclosure provides the following technical solutions:

A high-performance lithium manganese oxide cathode material with a low oxygen vacancy proportion is provided. According to characterization by electron paramagnetic resonance spectroscopy (EPR), an oxygen vacancy content in the high-performance lithium manganese oxide cathode material is 10 ppm to 10,000 ppm, indicating 0.01 to 10 vacancies per 1,000 oxygen atoms.

The oxygen vacancy content can be characterized by EPR. In the lithium manganese oxide crystal, the oxygen deficiency will lead to hole formation and changes in redox statuses of manganese ions, thereby causing the generation of unpaired electrons. A characteristic spectrum for these unpaired electrons can be determined by the EPR technique. The presence and content of oxygen vacancies can be quantitatively determined by the internal standard method. Oxygen vacancies can also cause a small plateau at an end region of a discharge curve of a product during electrochemical performance testing. An oxygen vacancy level can be evaluated through a proportion of a discharge capacity of 3.5 V or less in the total discharge capacity in the first discharge curve during product characterization.

For the high-performance lithium manganese oxide cathode material with a low oxygen vacancy proportion, preferably, a molecular formula of the high-performance lithium manganese oxide cathode material is Li₁₊ₓ(M₁)_{y}(M₂)_{z}Mn_{2-x-y-z}O₄, where 0 < x < 0.15, 0 < y < 0.15, 0 < z < 0.15, M₁ is at least one selected from the group consisting of monovalent metal elements K, Na, and Li, and M₂ is at least one selected from the group consisting of B, Nb, Mo, and V.

Preferably, a Mn dissolution amount of the high-performance lithium manganese oxide cathode material is less than or equal to 100 ppm.

Preferably, the high-performance lithium manganese oxide cathode material has a tap density of more than or equal to 1.6 g/cm³, a specific surface area of 0.15 m²/g to 1.20 m²/g, a particle size D50 of 10 µm to 20 µm, and a span value of 0.5 to 1.20.

Based on a general inventive concept, the present disclosure also provides a preparation method of the high-performance lithium manganese oxide cathode material with a low oxygen vacancy proportion, including the following steps:
(1) according to a stoichiometric ratio, thoroughly mixing a Li source compound, a Mn source compound, and a fluxing agent element-containing compound to produce a first mixture;
(2) subjecting the first mixture to first calcination in an air atmosphere, and cooling and crushing to produce a first calcined product;
(3) mixing the first calcined product with a monovalent metal ion-containing compound to produce a second mixture; and
(4) subjecting the second mixture to second calcination in an air atmosphere, and cooling and crushing to produce a second calcined product, where a temperature of the second calcination is lower than a temperature of the first calcination, and the second calcined product is the high-performance lithium manganese oxide cathode material.

In the preparation method of the high-performance lithium manganese oxide of the present disclosure, during the first calcination, a fluxing agent element (the M₂ element) is doped to make grain boundaries inside and on surfaces of lithium manganese oxide particles at a molten state, such that atoms in a crystal are constrained to form a tight network structure, which can effectively reduce the generation of oxygen vacancies. During the second calcination, a monovalent metal cation-containing compound is doped to mitigate the dissolution of manganese caused by the disproportionation of trivalent manganese. The temperature of the second calcination is relatively low to create an annealing stage, which facilitates the repair of internal lattice defects during a calcination process and reduces the content of oxygen vacancies. As a result, the high-performance lithium manganese oxide cathode material is finally produced. A molecular formula of the high-performance lithium manganese oxide cathode material can be characterized as Li₁₊ₓ(M₁)_{y}(M₂)_{z}Mn_{2-x-y-z}O₄, where 0 < x < 0.15, 0 < y < 0.15, 0 < z < 0.15, M₁ is at least one selected from the group consisting of monovalent metal elements K, Na, and Li, and M₂ is at least one selected from the group consisting of B, Nb, Mo, and V.

In the preparation method, preferably, in the step (1), the Li source compound is at least one selected from the group consisting of LiCO₃, LiOH, and LiCl, and the Mn source compound is at least one selected from the group consisting of MnO₂, Mn₂O₃, Mn₃O₄, MnCO₃, and Mn₅O₈.

Preferably, in the step (1), the fluxing agent element-containing compound is at least one selected from the group consisting of an oxide, a hydroxide, a phosphate, a carbonate, an oxyhydroxide, and an alkali that include a fluxing agent element, and the fluxing agent element is at least one selected from the group consisting of B, Nb, Mo, and V.

Preferably, in the step (2), the first calcination is conducted for 2 h to 20 h at 750°C to 1,100°C with a heating rate of 1°C/min to 5°C/min; during the first calcination, the air atmosphere is introduced at a flow rate of 0.1 m³/h to 3 m³/h for every 1 kg of the first mixture; and the first calcined product has a particle size D50 of 10 µm to 20 µm.

Preferably, in the step (3), the monovalent metal ion-containing compound is at least one selected from the group consisting of an oxide, a hydroxide, a phosphate, a carbonate, an oxyhydroxide, and an alkali that include a monovalent metal element, and the monovalent metal element is at least one selected from the group consisting of Li, Na, and K.

Preferably, in the step (4), the second calcination is conducted for 2 h to 15 h at 500°C to 750°C; during the second calcination, the air atmosphere is introduced at a flow rate of 0.1 m³/h to 3 m³/h for every 1 kg of the second mixture; and the second calcined product has a particle size D50 of 10 µm to 20 µm.

Compared with the prior art, the present disclosure has the following advantages:
(1) In the present disclosure, during the first calcination, a fluxing agent element (the M₂ element)-containing compound is doped. Under the action of the fluxing agent element, lithium and the fluxing agent element penetrate into manganese source matrix particles. Under the action of a high temperature, lithium manganese oxide particles are produced around the manganese source matrix particles. The fluxing agent element has a low melting point and small adhesion, such that grain boundaries inside and on surfaces of lithium manganese oxide particles are in a molten state and atoms in a crystal are constrained to form a tight network structure, which can effectively reduce the generation of oxygen vacancies. During the second calcination, a monovalent metal ion (the M₁ element)-containing compound is doped at a relatively low temperature, which can balance the overall valence state of Mn and allow oxygen vacancies in the manganese source matrix to be repaired at the low temperature, thereby significantly improving the cycling and storage performance. After the two times of calcination, the fluxing agent element and the monovalent metal cation-containing compound are compounded, and micro-powder particles or fine particles are easily enriched and fixed on surfaces of large particles. Thus, there is high particle size concentration, a reduced specific surface area, and a declined direct contact between the cathode material and an electrolyte, which is conducive to the structural stability of a material during a long cycling process.
(2) The high-performance lithium manganese oxide cathode material prepared by the preparation method of the present disclosure has an oxygen vacancy content reduced from 38,140 ppm to 1,080 ppm and a Mn dissolution amount reduced from 203 ppm to 23 ppm, which makes the high-temperature cycling and storage performance significantly improved. Therefore, the high-performance lithium manganese oxide cathode material can be well used in power-end fields such as passenger cars, electric bicycles, and electric tools.

### BRIEF DESCRIPTION OF THE DRAWINGS

To describe the technical solutions in the embodiments of the present disclosure or in the prior art clearly, the accompanying drawings required for describing the embodiments or the prior art will be briefly described below. Apparently, the accompanying drawings in the following description show some embodiments of the present disclosure, and a person of ordinary skill in the art may still derive other drawings from these accompanying drawings without creative efforts.
FIG. 1 is an X-ray diffraction (XRD) pattern of high-performance lithium manganese oxide synthesized in Example 1;
FIG. 2 is a scanning electron microscopy (SEM) image of the high-performance lithium manganese oxide synthesized in Example 1;
FIG. 3 shows a particle size distribution of the high-performance lithium manganese oxide synthesized in Example 1;
FIG. 4 shows a capacity decay curve of the high-performance lithium manganese oxide synthesized in Example 1 during cycles at room temperature (25°C);
FIG. 5 shows a capacity decay curve of the high-performance lithium manganese oxide synthesized in Example 1 during cycles at a high temperature (45°C);
FIG. 6 is an SEM image of high-performance lithium manganese oxide synthesized in Example 2;
FIG. 7 is an SEM image of high-performance lithium manganese oxide synthesized in Example 3; and
FIG. 8 is an SEM image of high-performance lithium manganese oxide synthesized in Example 4.

### DETAILED DESCRIPTION

In order to facilitate the understanding of the present disclosure, the present disclosure is described in detail below in conjunction with the accompanying drawings of the specification and the preferred examples, but the protection scope of the present disclosure is not limited to the following specific examples.

Unless otherwise defined, all technical terms used hereinafter have the same meanings as commonly understood by those skilled in the art. The technical terms used herein are merely for the purpose of describing specific examples, and are not intended to limit the protection scope of the present disclosure.

Unless otherwise specified, various raw materials, reagents, instruments, devices, etc. used in the present disclosure can be purchased from the market or can be prepared by the existing methods.

### Example 1:

A high-performance lithium manganese oxide cathode material with a low oxygen vacancy proportion was provided, which had a molecular formula of Li_{1.075}Na_{0.008}Mn_{1.912}B_{0.005}O₄.

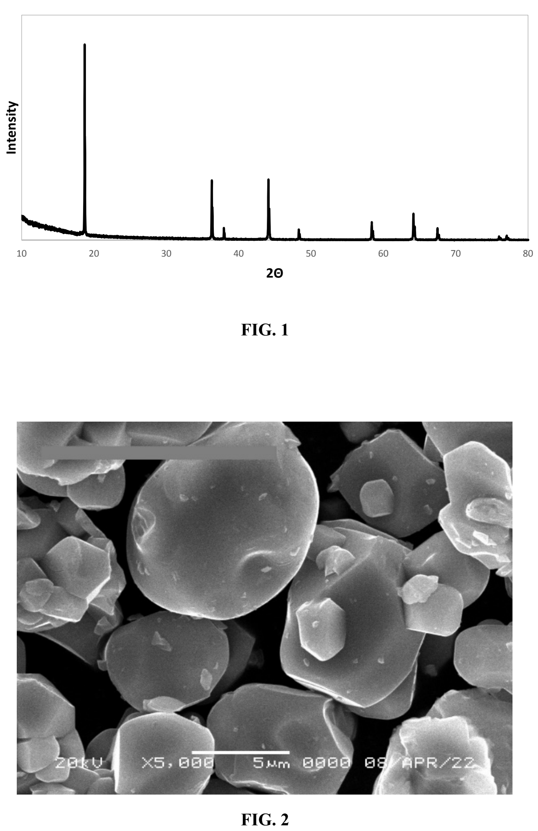

A preparation method of the high-performance lithium manganese oxide cathode material in this example was provided, including the following steps:
(1) According to a stoichiometric ratio designed for Li_{1.075}Mn_{1.912}B_{0.005}, 10 kg of a manganese source Mn₃O₄, 2.679 kg of lithium carbonate, and 20.8 g of a fluxing agent element-containing compound H₃BO₃ were added to a high-speed mixer, mixed at 500 rpm for 5 min, and then mixed at 1,500 rpm for 20 min to produce a first mixture. No white spots were visually observed in the first mixture.
(2) The first mixture obtained in the step (1) was added to a sagger at an amount 50% of a volume of the sagger. The sagger was then placed in a box-type atmosphere furnace, and an air atmosphere was introduced at a flow rate of 1 m³/h/kg of the first mixture (for every 1 kg of the first mixture, a flow rate was 1 m³/h). The first mixture was heated at a heating rate of 2.5°C/min to 850°C, kept at 850°C for 10 h, then naturally cooled to room temperature, and discharged to produce a calcined mixture.
(3) The calcined mixture obtained in the step (2) was rolled, then crushed with a jet mill crushing device, and sieved through a 300-mesh sieve, and an oversized material was removed to obtain a powder with a particle size of no more than 12 µm, which was a first calcined product.
(4) 10 kg of the first calcined product and 28.5 g of a monovalent metal ion-containing compound Na₂CO₃ were weighed, placed in a high-speed mixer, mixed at 400 rpm for 5 min, and then mixed at 1,500 rpm for 15 min to produce a second mixture.
(5) The second mixture obtained in the step (4) was calcined at 700°C for 5 h, cooled to room temperature, crushed, and then sieved through a 300-mesh sieve to produce a final sample, which was the final lithium manganese oxide product. A sample was collected and subjected to XRD testing to determine a compound phase. An XRD pattern was shown in FIG. 1.

According to the XRD pattern in FIG. 1, the product obtained in this example has no impurity phases and exhibits excellent crystallinity.

The final sample prepared in this example was scanned by a scanning electron microscope, and a result was shown in FIG. 2. Primary particles of the sample are uniform and have no fine particles adhering to a surface. The sample has a relatively-high tap density of 2.2 g/cm³ indicating a dense internal structure, a specific surface area of 0.21 m²/g, a particle size D50 of 12 µm, and a span [(D90-D10)/D50] value of 0.96.

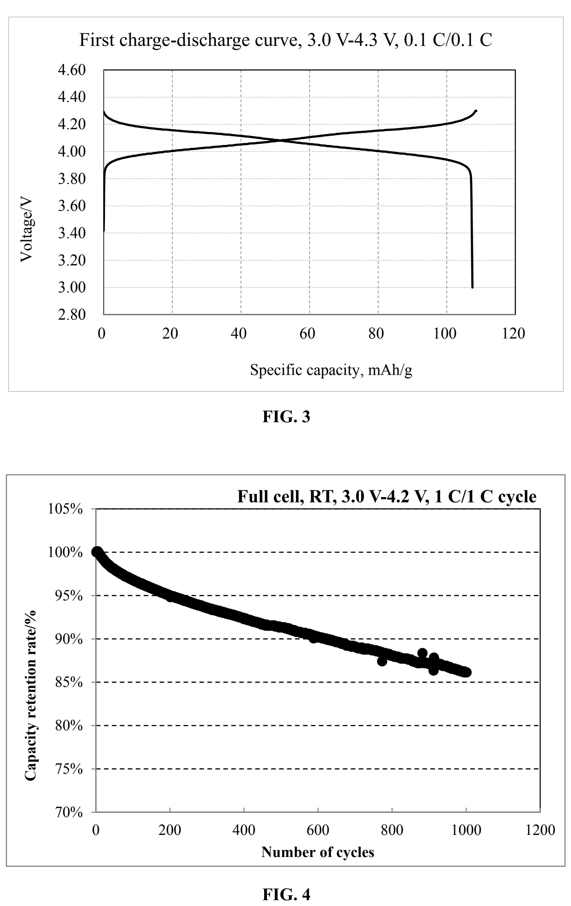

With the modified lithium manganese oxide product synthesized in this example as a positive electrode, a CR2032 button cell was assembled. The first charge-discharge capacity evaluation was conducted for this button cell. The modified lithium manganese oxide, SP (conductive carbon black), and polyvinylidene fluoride (PVDF) (binder) were mixed in a mass ratio of 92.5:0.5:0.25, then uniformly coated on an aluminum foil, dried, rolled, and cut to produce a positive electrode sheet. A lithium metal sheet was adopted as a negative electrode sheet. The button cell was assembled and sealed in a glove box. After being allowed to rest for 10 h to achieve activation, the button cell was tested with a Neware 5 V/5 mA testing cabinet in a voltage range of 3.0 V to 4.3 V, and the first charge-discharge cycle was conducted at 0.1 C to determine the first-cycle capacity. Test results were shown in FIG. 3. The first discharge capacity was 107.5 mAh/g. The first-cycle efficiency was 98%. A proportion of a discharge capacity of 3.5 V or less in the total discharge capacity during the first discharge was 0.21%. A 1 C/0.1 C ratio was 98%, indicating excellent rate performance. The prepared button cell was subjected to Mn dissolution characterization. After being allowed to rest for 10 h to achieve activation, the button cell was charged and discharged for a week, and then fully charged. The positive electrode sheet in the button cell was disassembled and placed in a 5 mL plastic bottle, and 4 mL of an electrolyte was added. The plastic bottle was then stored in a 60°C oven for 2 weeks. The electrolyte was extracted with a syringe, filtered, treated with an acid, diluted, and tested by inductively coupled plasma (ICP) for a manganese content to determine a Mn dissolution amount. In this example, the Mn dissolution amount was measured by the above method to be 23 ppm.

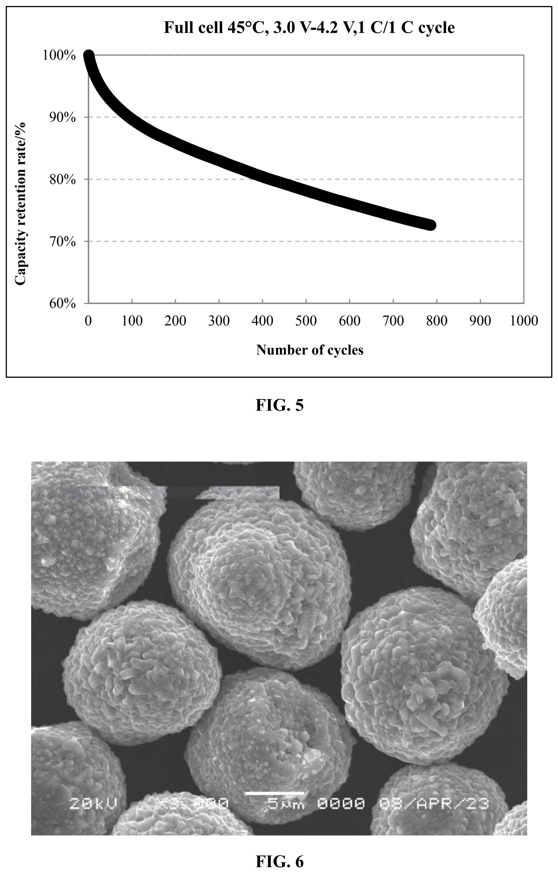

With the high-performance lithium manganese oxide synthesized in this example as a positive electrode, a 053048A pouch cell was assembled. The modified lithium manganese oxide, SP (conductive carbon black), and PVDF (binder) were mixed in a ratio of 93.5:3.25:3.25 to produce a positive electrode slurry. FSN-1 (synthetic graphite from Shanghai Shanshan Technology Co., Ltd.), SP (conductive carbon black), carboxymethyl cellulose (CMC), and styrene-butadiene rubber (SBR) were mixed in a ratio of 94.8:1.5:1.7:2.0 to produce a negative electrode slurry. The positive electrode slurry was evenly coated on an aluminum foil, and the negative electrode slurry was evenly coated on a copper foil. Electrode cutting, assembly, electrolyte injection, and formation were conducted to produce the pouch cell. The pouch cell was tested with a Neware testing cabinet in a test voltage range of 3.0 V to 4.2 V. The cycling performance at 25°C and 45°C was tested. FIG. 4 shows a capacity decay curve during charge-discharge cycles at 25°C. It can be seen that a capacity retention rate after 1,000 cycles is 86.2%. FIG. 5 shows a capacity decay curve during charge-discharge cycles at 45°C. It can be seen that a capacity retention rate after 800 cycles is 73%.

The modified lithium manganese oxide synthesized in this example was subjected to oxygen vacancy characterization by EPR. An oxygen vacancy content was 1,080 ppm.

### Example 2:

A high-performance lithium manganese oxide cathode material with a low oxygen vacancy proportion was provided, which had a molecular formula characterized as Li_{1.065}Li_{0.009}Mn_{1.925}Mo_{0.001}O₄.

A preparation method of the high-performance lithium manganese oxide cathode material in this example was provided, including the following steps:
According to a design ratio of Li_{1.065}Mn_{1.925}Mo_{0.001}, 10 kg of a manganese source Mn₃O₄, 2.636 kg of battery-grade lithium carbonate, and 9.6 g of a fluxing agent element-containing compound MoO₃ were weighed and added to a high-speed mixer. Parameters for mixing and calcination all were consistent with those in Example 1. After the first calcined product was produced, 10 kg of the first calcined product and 14.4 g of a monovalent metal ion-containing compound LiOH were taken, thoroughly mixed, and then added to a high-speed mixer. Parameters for mixing and calcination all were consistent with those in Example 1. A final product was the high-performance lithium manganese oxide cathode material.

The relevant properties of the modified lithium manganese oxide cathode material in this example were tested by the same method as in Example 1. An oxygen vacancy content of the final product was characterized by EPR to be 1,530 ppm. The final product prepared in this example was scanned by a scanning electron microscope, and a result was shown in FIG. 6. Primary particles of the product are uniform and have no fine particles adhering to a surface. The product has a tap density of 2.2 g/cm³, a specific surface area of 0.50 m²/g, a particle size D50 of 11.3 µm, and a span [(D90-D10)/D50] value of 0.92. A button cell prepared accordingly was charged and discharged at 0.1 C in a voltage range of 3.0 V to 4.3 V. The first discharge capacity was 112.5 mAh/g, the first-cycle efficiency was 97%, and a proportion of a discharge capacity of 3.5 V or less in the total discharge capacity during the first discharge was 0.36%. A Mn dissolution amount was characterized to be 42 ppm. A pouch cell prepared accordingly was tested in a voltage range of 3.0 V to 4.2 V. A1 C/0.1 C ratio was 99%. A capacity retention rate after 1,000 cycles at room temperature was 84%. A capacity retention rate after 800 cycles at 45°C was 76%.

### Example 3:

A high-performance lithium manganese oxide cathode material with a low oxygen vacancy proportion was provided, which had a molecular formula characterized as Li_{1.045}Na_{0.007}Mn_{1.942}Nb_{0.006}O₄.

A preparation method of the high-performance lithium manganese oxide cathode material in this example was provided, including the following steps:
According to a design ratio of Li_{1.045}Mn_{1.942}Nb_{0.006}, 10 kg of a manganese source MnO₂, 2.20 kg of battery-grade lithium carbonate, and 45 g of a fluxing agent element-containing compound Nb₂O₅ were weighed and added to a high-speed mixer. Parameters for mixing and calcination all were consistent with those in Example 1. After the first calcined product was produced, 10 kg of the first calcined product and 16 g of a monovalent metal ion-containing compound Na₂CO₃ were taken, thoroughly mixed, and then added to a high-speed mixer. Parameters for mixing and calcination all were consistent with those in Example 1. A final product was the high-performance lithium manganese oxide cathode material.

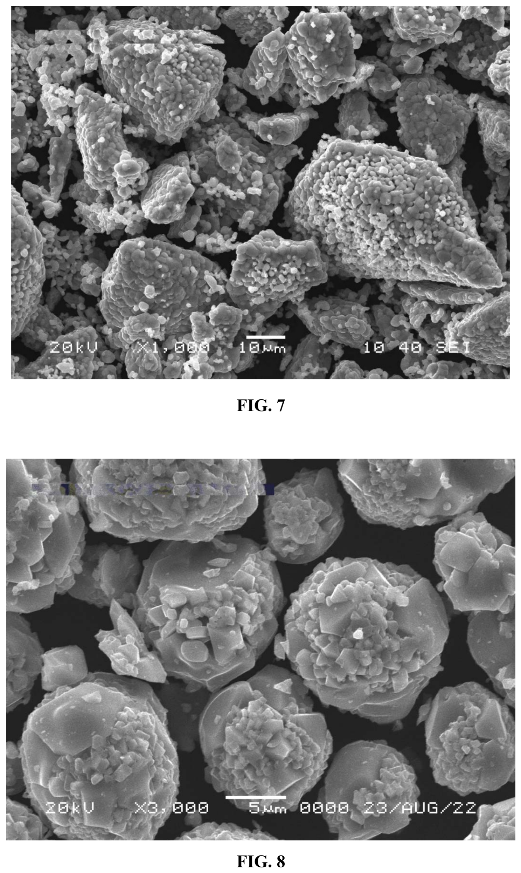

The relevant properties of the modified lithium manganese oxide cathode material in this example were tested by the same method as in Example 1. An oxygen vacancy content of the final product was characterized by EPR to be 2,340 ppm. The final product prepared in this example was scanned by a scanning electron microscope, and a result was shown in FIG. 7. Primary particles of the product are uniform. The product has a tap density of 2.1 g/cm³, a specific surface area of 0.68 m²/g, a particle size D50 of 17 µm, and a span [(D90-D10)/D50] value of 1.05. A button cell prepared accordingly was charged and discharged at 0.1 C in a voltage range of 3.0 V to 4.3 V. The first discharge capacity was 116.3 mAh/g, the first-cycle efficiency was 95%, and a proportion of a discharge capacity of 3.5 V or less in the total discharge capacity during the first discharge was 0.64%. A Mn dissolution amount was tested to be 51 ppm. A pouch cell prepared accordingly was tested in a voltage range of 3.0 V to 4.2 V. A 1 C/0.1 C ratio was 99%. A capacity retention rate after 1,000 cycles at room temperature was 82%. A capacity retention rate after 800 cycles at 45°C was 75%.

### Example 4:

A high-performance lithium manganese oxide cathode material with a low oxygen vacancy proportion was provided, which had a molecular formula characterized as Li_{1.055}K_{0.008}Mn_{1.932}V_{0.005}O₄.

A preparation method of the high-performance lithium manganese oxide cathode material in this example was provided, including the following steps:
According to a design ratio of Li_{1.055}Mn_{1.932}V_{0.005}, 10 kg of a manganese source Mn₃O₄, 2.602 kg of battery-grade lithium carbonate, and 30.20 g of a fluxing agent element-containing compound V₂O₅ were weighed and added to a high-speed mixer. Parameters for mixing and calcination all were consistent with those in Example 1. After the first calcined product was produced, 10 kg of the first calcined product and 29.81 g of a monovalent metal ion-containing compound KOH were taken, thoroughly mixed, and then added to a high-speed mixer. Parameters for mixing and calcination all were consistent with those in Example 1. A final product was the high-performance lithium manganese oxide cathode material.

The relevant properties of the modified lithium manganese oxide cathode material in this example were tested by the same method as in Example 1. An oxygen vacancy content of the final product was characterized by EPR to be 3,500 ppm. The final product prepared in this example was scanned by a scanning electron microscope, and a result was shown in FIG. 8. Primary particles of the product are uniform. The product has a tap density of 2.1 g/cm³, a specific surface area of 0.32 m²/g, a particle size D50 of 13.3 µm, and a span [(D90-D10)/D50] value of 0.95. A button cell prepared accordingly was charged and discharged at 0.1 C in a voltage range of 3.0 V to 4.3 V. The first discharge capacity was 117.8 mAh/g, the first-cycle efficiency was 97.5%, and a proportion of a discharge capacity of 3.5 V or less in the total discharge capacity during the first discharge was 0.47%. A Mn dissolution amount was tested to be 62 ppm. A pouch cell prepared accordingly was tested in a voltage range of 3.0 V to 4.2 V. A 1 C/0.1 C ratio was 99%. A capacity retention rate after 1,000 cycles at room temperature was 83%. A capacity retention rate after 800 cycles at 45°C was 74%.

### Comparative Example 1:

A preparation method of a modified lithium manganese oxide cathode material in this comparative example was different from the preparation method in Example 1 merely in that H₃BO₃ was not added in the step (1).

A final product in Comparative Example 1 was evaluated by the same methods as those in Example 1. An oxygen vacancy content of the product was characterized by EPR to be 14,500 ppm. The product had a tap density of 2.1 g/cm³, a specific surface area of 0.65 m²/g, a particle size D50 of 14 µm, and a span [(D90-D10)/D50] value of 1.15. A button cell prepared accordingly was charged and discharged at 0.1 C in a voltage range of 3.0 V to 4.3 V. The first discharge capacity was 102.6 mAh/g, the first-cycle efficiency was 93%, a proportion of a discharge capacity of 3.5 V or less in the total discharge capacity during the first discharge was 1.05%, and a 1 C/0.1 C ratio was 92%. A Mn dissolution amount was 155 ppm.

A 053048A pouch cell was assembled, and tested in a voltage range of 3.0 V to 4.2 V. The cycling performance at 25°C and 45°C was tested. According to a capacity decay curve during charge-discharge cycles at 25°C, a capacity retention rate after 1,000 cycles reaches 70%, and a capacity retention rate after 800 cycles reaches 65%.

### Comparative Example 2:

A preparation method of a modified lithium manganese oxide cathode material in this comparative example was different from the preparation method in Example 1 merely in that a specific operation of the step (4) was as follows: 10 kg of the first calcined product was fed into the high-speed mixer without adding Na₂CO₃, first stirred at 400 rpm for 5 min, and then stirred at 1,500 rpm for 15 min to produce a material for the second calcination.

A final product in Comparative Example 2 was evaluated by the same methods as those in Example 1. An oxygen vacancy content of the product was characterized by EPR to be 28,260 ppm. The product had a tap density of 1.9 g/cm³, a specific surface area of 0.58 m²/g, a particle size D50 of 11 µm, and a span [(D90-D10)/D50] value of 1.20. A button cell prepared accordingly was charged and discharged at 0.1 C in a voltage range of 3.0 V to 4.3 V. The first discharge capacity was 106.0 mAh/g, the first-cycle efficiency was 93.3%, and a proportion of a discharge capacity of 3.5 V or less in the total discharge capacity during the first discharge was 1.33%. A Mn dissolution amount was tested to be 125 ppm. A 053048A pouch cell prepared accordingly was tested in a voltage range of 3.0 V to 4.2 V. A 1 C/0.1 C ratio was 92%. A capacity retention rate after 1,000 cycles at room temperature was 73%. A capacity retention rate after 800 cycles at 45°C was 60%.

### Comparative Example 3:

A preparation method of a modified lithium manganese oxide cathode material in this comparative example was the same as the preparation method in Example 1, except that, the steps (1) and (4) were different, where H₃BO₃ was not added in the step (1) and Na₂CO₃ was not added in the step (4).

A final product in Comparative Example 3 was evaluated by the same methods as those in Example 1. An oxygen vacancy content of the product was characterized by EPR to be 38,140 ppm. The product had a tap density of 1.9 g/cm³, a specific surface area of 0.70 m²/g, a particle size D50 of 11 µm, and a span [(D90-D10)/D50] value of 1.27. A button cell prepared accordingly was charged and discharged at 0.1 C in a voltage range of 3.0 V to 4.3 V. The first discharge capacity was 105.2 mAh/g, the first-cycle efficiency was 91%, and a proportion of a discharge capacity of 3.5 V or less in the total discharge capacity during the first discharge was 1.78%. A Mn dissolution amount was tested to be 203 ppm. A 053048A pouch cell prepared accordingly was tested in a voltage range of 3.0 V to 4.2 V. A 1 C/0.1 C ratio was 95%. A capacity retention rate after 1,000 cycles at room temperature was 60%. A capacity retention rate after 800 cycles at 45°C was 53%.

## Claims

1. A high-performance lithium manganese oxide cathode material with a low oxygen vacancy proportion, wherein according to characterization by electron paramagnetic resonance spectroscopy (EPR), an oxygen vacancy content in the high-performance lithium manganese oxide cathode material is 10 ppm to 10,000 ppm.

2. The high-performance lithium manganese oxide cathode material with a low oxygen vacancy proportion according to claim 1, wherein a molecular formula of the high-performance lithium manganese oxide cathode material is Li₁₊ₓ(M₁)_{y}(M₂)_{z}Mn_{2-x-y-z}O₄, wherein 0 < x < 0.15, 0 < y < 0.15, 0 < z < 0.15, M₁ is at least one selected from the group consisting of monovalent metal elements K, Na, and Li, and M₂ is at least one selected from the group consisting of fluxing agent elements B, Nb, Mo, and V.

3. The high-performance lithium manganese oxide cathode material with a low oxygen vacancy proportion according to claim 1, wherein a Mn dissolution amount of the high-performance lithium manganese oxide cathode material is less than or equal to 100 ppm.

4. The high-performance lithium manganese oxide cathode material with a low oxygen vacancy proportion according to any one of claims 1 to 3, wherein the high-performance lithium manganese oxide cathode material has a tap density of more than or equal to 1.6 g/cm³, a specific surface area of 0.15 m²/g to 1.20 m²/g, a particle size D50 of 10 µm to 20 µm, and a span value of 0.50 to 1.20.

5. A preparation method of the high-performance lithium manganese oxide cathode material with a low oxygen vacancy proportion according to any one of claims 1 to 4, comprising the following steps:
(1) according to a stoichiometric ratio, thoroughly mixing a Li source compound, a Mn source compound, and a fluxing agent element-containing compound to produce a first mixture;
(2) subjecting the first mixture to first calcination in an air atmosphere, and cooling and crushing to produce a first calcined product;
(3) mixing the first calcined product with a monovalent metal ion-containing compound to produce a second mixture; and
(4) subjecting the second mixture to second calcination in an air atmosphere, and cooling and crushing to produce a second calcined product, wherein a temperature of the second calcination is lower than a temperature of the first calcination, and the second calcined product is the high-performance lithium manganese oxide cathode material.

6. The preparation method according to claim 5, wherein in the step (1), the Li source compound is at least one selected from the group consisting of LiCO₃, LiOH, and LiCl, and the Mn source compound is at least one selected from the group consisting of MnO₂, Mn₂O₃, Mn₃O₄, MnCO₃, and Mn₅O₈.

7. The preparation method according to claim 5, wherein in the step (1), the fluxing agent element-containing compound is at least one selected from the group consisting of an oxide, a hydroxide, a phosphate, a carbonate, an oxyhydroxide, and an alkali that comprise a fluxing agent element, and the fluxing agent element is at least one selected from the group consisting of B, Nb, Mo, and V.

8. The preparation method according to claim 5, wherein in the step (2), the first calcination is conducted for 2 h to 20 h at 750°C to 1,100°C with a heating rate of 1°C/min to 5°C/min; during the first calcination, the air atmosphere is introduced at a flow rate of 0.1 m³/h to 3 m³/h for every 1 kg of the first mixture; and the first calcined product has a particle size D50 of 10 µm to 20 µm.

9. The preparation method according to claim 5, wherein in the step (3), the monovalent metal ion-containing compound is at least one selected from the group consisting of an oxide, a hydroxide, a phosphate, a carbonate, an oxyhydroxide, and an alkali that comprise a monovalent metal element, and the monovalent metal element is at least one selected from the group consisting of Li, Na, and K.

10. The preparation method according to any one of claims 5 to 9, wherein in the step (4), the second calcination is conducted for 2 h to 15 h at 500°C to 750°C; during the second calcination, the air atmosphere is introduced at a flow rate of 0.1 m³/h to 3 m³/h for every 1 kg of the second mixture; and the second calcined product has a particle size D50 of 10 µm to 20 µm.
